# EUROPEAN PATENT APPLICATION

(11) **EP 4 079 975 A1**
(43) Date of publication of application: **26.10.2022**
(21) Application number: 21756401.2
(22) Date of filing: 12.01.2021
(51) Int. Cl.: E02F 9/16, E02F 9/26

(54) **REMOTE OPERATION SUPPORT DEVICE AND REMOTE OPERATION SUPPORT METHOD FOR WORK MACHINE**

(30) Priority: 18.02.2020 JP 2020025634
(71) Applicant: KOBELCO CONSTRUCTION MACHINERY CO., LTD., Hiroshima-shi Hiroshima 731-5161 (JP)
(72) Inventor: OTANI Masaki, Hiroshima-shi, Hiroshima 731-5161 (JP); YAMAZAKI Yoichiro, Hiroshima-shi, Hiroshima 731-5161 (JP)
(74) Representative: Schön, Christoph
(86) International application number: PCT/JP2021/000632
(87) International publication number: WO 2021/166486

(57) **Abstract**

A remote operation support device 100 is provided that is for improving the work efficiency of a remote operation performed by an operator, without fogging a front window 425F of a work machine 40 that is remotely operated by the operator. The remote operation support device 100 includes: a meteorological data obtaining unit 103 that obtains meteorological data at a designated time; an intra-cab temperature estimation unit 104; an intra-cab humidity estimation unit 105; a fogging determination unit 106; and an anti-fogging control unit 107. The anti-fogging control unit 107 performs an anti-fogging process for preventing the front window 425F from being fogged when a determination result by the fogging determination unit 106 is affirmative.

## Description

### Technical Field

The present invention relates to a remote operation support device and a remote operation support system that support remote work to be performed by an operator operating a work machine through operating a remote operation device.

### Background Art

Conventionally, a work environment adjustment device that adjusts the work environment in an operator cab of an excavator by controlling an air conditioner has been known (for example, see Patent Literature 1).

### Citation List

### Patent Literature

Patent Literature 1: Japanese Patent Laid-Open No. 2018-168639

### Summary of Invention

### Technical Problem

What is in Patent Literature 1 can refresh the operator before they fatigue, by changing the work environment in the operator cab. Accordingly, the work environment allowing the operator to feel little fatigue can be provided.

If the operator identifies that a front window of a work machine is fogged before starting work through the work machine, they operate the air conditioner and the like to remove the fogging by a work start time.

In a case where the operator actually gets in the work machine and performs work, they easily recognize a situation prone to cause fogging, through the meteorological condition and the like around the work machine. In another case where a work machine is remotely operated by an operator and they are not in the work machine, they are at a place remote from the work machine. Accordingly, they are late to notice the necessity of removing fogging. When the operator intends to start work through the work machine, they cannot immediately start the work owing to the fogging.

In view of such a background, the present invention has an object to provide a remote operation support device and a remote operation support method that prevent a front window of a work machine, which is remotely operated by an operator, from being fogged in view of use schedule of the work machine and meteorological information.

### Solution to Problem

To achieve such an object, a remote operation support device according to the present invention is
a remote operation support device for supporting an operator's remote operation of the work machine using a remote operation device comprising a remote output interface that outputs a taken image that has been taken through a window defining a cab by an imaging device and indicates a situation outside of the cab, the imaging device being disposed in an internal space of the cab of the work machine, the remote operation support device comprising:
a meteorological data obtaining unit configured to obtain meteorological data that is data about a meteorological phenomenon at a designated time in an area where the work machine resides, from a meteorological information source residing outside of the work machine;
an intra-cab temperature estimation unit configured to estimate a temperature in then internal space of the cab of the work machine, based on the meteorological data;
an intra-cab humidity estimation unit configured to estimate a humidity in the internal space of the cab of the work machine, based on the meteorological data;
a fogging determination unit configured to determine whether the window is fogged or not based on outside temperature data that is data about an outside temperature outside of the cab of the work machine and is included in the meteorological data, on intra-cab temperature data that is data about the temperature in the cab estimated by the intra-cab temperature estimation unit, and on intra-cab humidity data that is data about the humidity in the cab estimated by the intra-cab humidity estimation unit; and
an anti-fogging control unit configured to perform an anti-fogging process for preventing the window from being fogged when a determination result by the fogging determination unit is affirmative.

The remote operation support device according to the present invention determines whether the window defining the cab of the work machine is possibly fogged at the designated time or not based on outside temperature data that is data about an outside temperature of the cab of the work machine and is included in the meteorological data obtained from a meteorological information source residing outside of the work machine, on intra-cab temperature data that is data about the temperature in the cab estimated by the intra-cab temperature estimation unit, and on intra-cab humidity data that is data about the humidity in the cab estimated by the intra-cab humidity estimation unit. When the determination result is affirmative, an anti-fogging process for preventing the window defining the cab of the work machine from being fogged is executed.

Accordingly, when the imaging device disposed in the internal space of the cab takes an image indicating the situation outside of the cab through the window, the image taken through the fogged window can be prevented from being output to the remote output interface. Accordingly, a remote operation is allowed at a time designated by the operator.

### Brief Description of Drawings

FIG. 1 illustrates the configuration of a remote operation support system as one embodiment of the present invention.

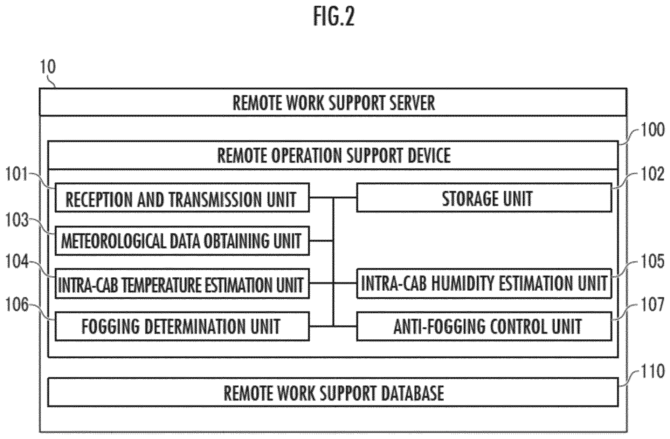

FIG. 2 illustrates the remote operation device as one embodiment of the present invention.
FIG. 3 is a block diagram of the remote operation device as one embodiment of the present invention.
FIG. 4 illustrates the remote operation device as one embodiment of the present invention.
FIG. 5 is a block diagram of a work machine as one embodiment of the present invention.
FIG. 6 illustrates the work machine as one embodiment of the present invention.
FIG. 7 illustrates windows as one embodiment of the present invention.
FIG. 8A is a graph showing the amount of saturated water vapor.
FIG. 8B is a table showing the amount of saturated water vapor.
FIG. 9 is a block diagram of a management client as one embodiment of the present invention.
FIG. 10 is a flowchart of remote work as one embodiment of the present invention.
FIG. 11 shows variation in temperature and humidity in and out of a cab as one embodiment of the invention.
FIG. 12 shows variation in temperature and humidity including time series in and out of the cab as one embodiment of the invention.

### Description of Embodiments

Hereinafter, referring to the drawings, a remote operation support system S according to an embodiment is described. In the following description, as an example, a case is described where a front window 425F that defines a cab 424 of a work machine 40 configured as a hydraulic excavator is prevented from being fogged. However, the work machine to be prevented from being fogged is not limited to a hydraulic excavator. The work machine may be, for example, a hybrid-type hydraulic excavator, a dismantler, a crane or the like.

In the following description, as an example, a case is described where the front window F of the hydraulic excavator is prevented from being fogged. This is because an imaging device 412 is disposed in the internal space of the cab 424 so as to take images of the external situation outside of the cab 424 mainly through the front window 425F.

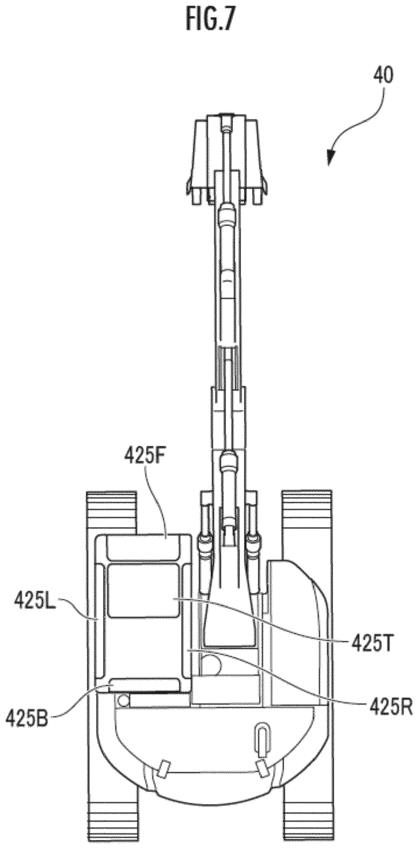

However, the window to be prevented from being fogged is not limited to the front window 425F. Depending on the mode of disposition or the imaging range of the imaging device 412, the window to be prevented from being fogged may be, for example, a roof window 425T, a right window 425R, a left window 425L, a back window 425B or the like (see FIG. 7). It is a matter of course that the number of each window to be prevented from being fogged may be two or more.

In the following description, the representation of various devices being "configured" to perform a predetermined function has a meaning that includes "being programmed" or "being designed" to achieve the predetermined function, by causing a processor (estimation processing device), such as a CPU, included in each of the various devices to read software in addition to required information from a memory, such as a ROM or a RAM, or a recording medium, and execute an estimation process for the information according to the software.

In the following description, the representation of a functional block being "configured" to perform a predetermined function has a meaning that includes "being programmed" or "being designed" to achieve the predetermined function, by causing an estimation processing device, such as a CPU, performing a process pertaining to a function of the functional block to read software in addition to required information from a memory, such as a ROM or a RAM, or a recording medium, and execute an estimation process for the information according to the software.

Functions of multiple functional blocks may be achieved by a common processor. Alternatively, each of the functions of the functional blocks may be achieved by cooperation of multiple processors capable of mutual communication.

### (Configuration of remote operation support system)

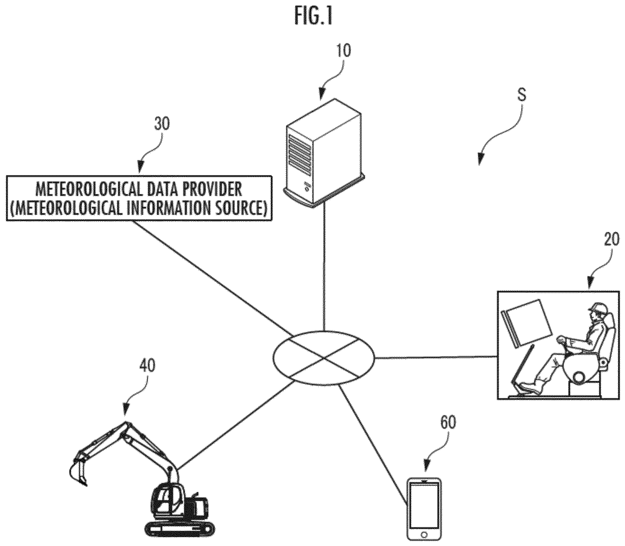

The remote operation support system S as one embodiment of the present invention shown in FIG. 1 includes a remote work support server 10, a remote operation device 20, a meteorological data provider (meteorological information source) 30, a work machine 40, and a management client 60. The remote work support server 10, the remote operation device 20, the meteorological data provider (meteorological information source) 30, the work machine 40 and the management client 60 are configured to be capable of mutual communication through a network. The remote work support server 10, the remote operation device 20, the meteorological data provider (meteorological information source) 30, the work machine 40, and the mutual communication network of the management client 60 may be independently provided, or each may be mounted on a specific element (for example, the function of the meteorological data provider (meteorological information source) 30 is mounted on the remote work support server 10).

### (Configuration of remote operation device)

The remote operation device 20 comprises a remote control device 200, a remote input interface 210, and a remote output interface 220. The remote control device 200 includes an estimation processing device (a single core processor, or a multi-core processor or processor cores constituting this), reads required data or software from a storage device, such as a memory, and executes an estimation process for this data according to the software. The remote input interface 210 comprises a remote operation mechanism 211. The remote output interface 220 comprises an image output device 221, and remote wireless communication equipment 222.

### (Configuration of remote work support server)

As shown in FIG. 1, the remote work support server 10 includes a remote operation support device 100, and a remote work support database 110. The remote work support database 110 records and holds an operation schedule of the work machine 40, and meteorological data. Specific examples of the remote work support database 110 include, for example: a magnetic storage device, such as an HDD; a semiconductor storage device, such as an SSD or a flash drive; and an optical storage device, such as an optical disk. The storage device, which constitutes the remote work support database 110, and a storage medium for storing data may be fixed or removable. The configuration of the remote operation support device 100 is described later.

### (Configuration of remote operation device)

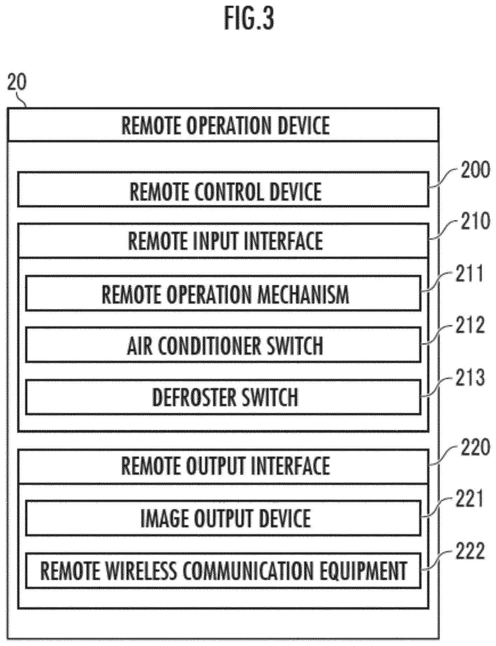

As shown in FIG. 3, the remote operation device 20 comprises the remote control device 200, the remote input interface 210, and the remote output interface 220. The remote control device 200 includes an estimation processing device (a single core processor, or a multi-core processor or processor cores constituting this), reads required data or software from a storage device, such as a memory, and executes an estimation process for this data according to the software. The remote input interface 210 comprises a remote operation mechanism 211. The remote output interface 220 comprises an image output device 221, and remote wireless communication equipment 222.

The remote operation mechanism 211 includes a traveling operation device, a turning operation device, a boom operation device, an arm operation device, and a bucket operation device. Each operation device includes an operation lever to be subject to a turning operation. The operation lever (traveling lever) of the traveling operation device is operated to drive a base carrier 460 of the work machine 40. The traveling lever may also serve as a traveling pedal. For example, a traveling pedal fixed to a base part or a lower end of the traveling lever may be provided. The operation lever (turning lever) of the turning operation device is operated to drive a hydraulic turning motor that constitutes a turning mechanism 430 of the work machine 40. The operation lever (boom lever) of the boom operation device is operated to drive a boom cylinder 442 of the work machine 40. The operation lever (arm lever) of the arm operation device is operated to drive an arm cylinder 444 of the work machine 40. The operation lever (bucket lever) of the bucket operation device is operated to drive a bucket cylinder 446 of the work machine 40.

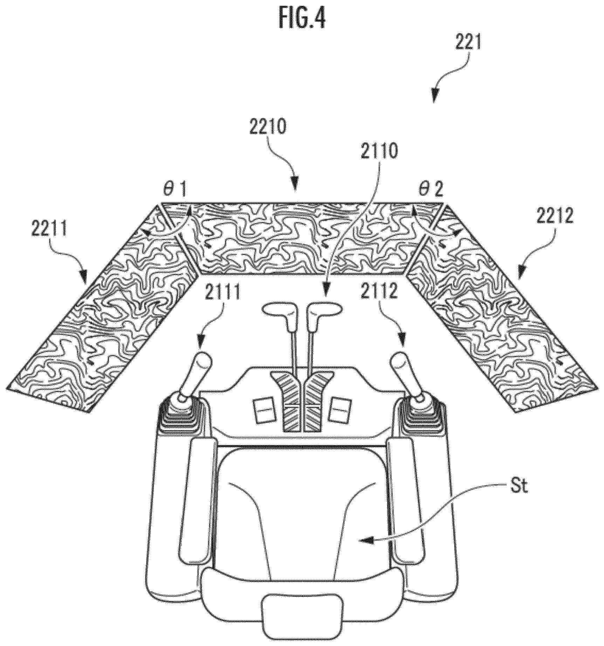

For example, as shown in FIG. 4, each of the operation levers constituting the remote operation mechanism 211 is disposed around a seat St where an operator sits. The seat St has a form of a high back chair with arm rests. Alternatively, the seat may be any form of a seating element that allows the operator to sit, such as what has a form of a low back chair without a head rest, or what has a form of a chair without a back support.

A pair of left and right traveling levers 2110 respectively corresponding to the left and right crawlers are laterally disposed to the left and right forward of the seat St. A single operation lever may serve as multiple operation levers. For example, the left operation lever 2111 provided forward of a left frame of the seat St shown in FIG. 4 may function as an arm lever when being operated in the longitudinal direction, and function as a turning lever when being operated in the lateral direction. Likewise, the right operation lever 2112 provided forward of a right frame of the seat St shown in FIG. 4 may function as a boom lever when being operated in the longitudinal direction, and function as a bucket lever when being operated in the lateral direction. The lever pattern may be optionally changed by the operator's operation instruction.

For example, as shown in FIG. 4, the image output device 221 includes a center image output device 2210, a left image output device 2211, and a right image output device 2212 that include substantially rectangular screens respectively disposed forward, diagonally forward left, and diagonally forward right of the seat St. The shapes and sizes of the screens (image display regions) of the center image output device 2210, the left image output device 2211 and the right image output device 2212 may be identical to or different from each other.

As shown in FIG. 4, the right edge of the left image output device 2211 is adjacent to the left edge of the center image output device 2210 so that the screen of the center image output device 2210 and the screen of the left image output device 2211 can have an inclination angle θ1 (e.g., 120° ≤ θ1 ≤ 150°). As shown in FIG. 4, the left edge of the right image output device 2212 is adjacent to the right edge of the center image output device 2210 so that the screen of the center image output device 2210 and the screen of the right image output device 2212 can have an inclination angle θ2 (e.g., 120° ≤ θ2 ≤ 150°). The inclination angles θ1 and θ2 may be identical to or different from each other.

Each screen of the center image output device 2210, the left image output device 2211 and the right image output device 2212 may be parallel to the vertical direction or inclined from the vertical direction. At least one image output device among the center image output device 2210, the left image output device 2211 and the right image output device 2212 may include plurally divided image output devices. For example, the center image output device 2210 may include a pair of image output devices that have substantially rectangular screens and are vertically adjacent to each other. The image output device 221 (the center image output device 2210, the left image output device 2211 and the right image output device 2212) may further comprise a speaker (audio output device).

### (Configuration of work machine)

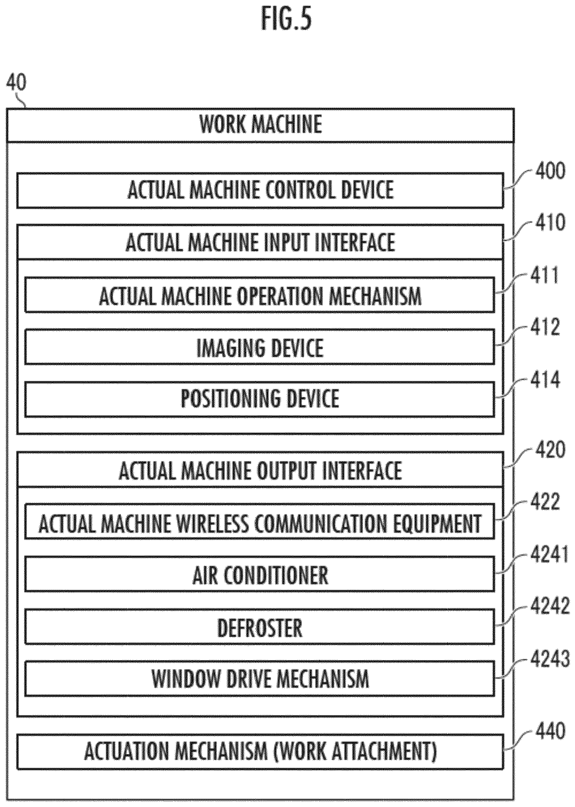

As shown in FIG. 5, the work machine 40 comprises an actual machine control device 400, an actual machine input interface 410, an actual machine output interface 420, and a work attachment 440. The actual machine control device 400 includes an estimation processing device (a single core processor, or a multi-core processor or processor cores constituting this), reads required data or software from a storage device, such as a memory, and executes an estimation process for this data according to the software.

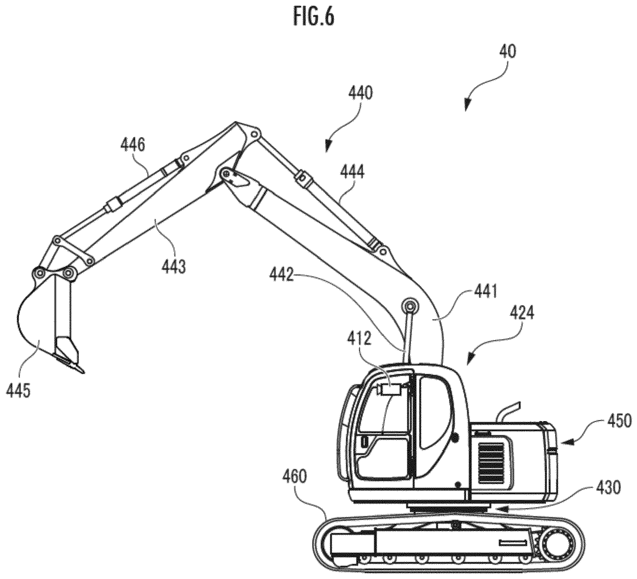

The work machine 40, for example, is a crawler excavator (construction machine), and comprises a crawler-type base carrier 460, and a turning superstructure 450 turnably mounted on the base carrier 460 via the turning mechanism 430, as shown in FIG. 6. The cab 424 (operator cab) is provided on a front left side of the turning superstructure 450.

The cab 424 (operator cab) comprises windows 425. The windows 425 comprise, for example, the front window 425F, the roof window 425T, the right window 425R, the left window 425L, and the back window 425B (see FIG. 7).

The cab 424 (operator cab) comprises a window drive mechanism 4243. Each of the windows 425 is freely opened and closed by operation of the drive mechanism. For example, the actual machine control device 400 performs a process for controlling opening and closing of the individual windows 425, and the drive mechanism is activated, thereby opening and closing the respective windows 425. That is, by opening and closing each of the windows 425, the intra-cab temperature and the intra-cab humidity can be adjusted.

The work attachment 440 is provided at the front center of the turning superstructure 450.

The actual machine input interface 410 comprises an actual machine operation mechanism 411, and the imaging device 412. The actual machine operation mechanism 411 comprises multiple operation levers disposed around the seat St disposed in the cab 424, in the similar manner to that of the remote operation mechanism 211. The cab 424 is provided with a drive mechanism or a robot that receives a signal dependent on the operation mode of the remote operation mechanism 211, and moves the actual machine operation lever, based on the received signal. A positioning device 414 includes a GNSS receiver (GNNS: Global Navigation Satellite System) for detecting the residing position of the work machine 40.

The imaging device 412 is, for example, disposed in the internal space of the cab 424, and takes an image of the environment including at least one part of the work attachment 440 through the front window F and the pair of the left and right side windows (the right window 425R and the left window 425L) sectioned by a pair of left and right pillars 4240 (in a case where the left and right are discriminated from each other, "L" and "R" are included in symbols) at the front of the cab 424. One part or all of the front window F and the side windows (the right window 425R and the left window 425L) may be omitted.

The actual machine output interface 420 comprises actual machine wireless communication equipment 422, an air conditioner 4241 (first room air conditioner), a defroster 4242 (second room air conditioner), and the window drive mechanism 4243. The actual machine wireless communication equipment 422 performs network communication with the remote work support server 10, the remote operation device 20, and the management client 60.

The work attachment 440 as an actuation mechanism comprises a boom 441 attached to the turning superstructure 450 in a manner capable of rising and falling, an arm 443 turnably coupled to the distal end of the boom 441, and a bucket 445 turnably coupled to the distal end of the arm 443. The boom cylinder 442, the arm cylinder 444 and the bucket cylinder 446, which include extendable hydraulic cylinders, are attached to the work attachment 440.

The boom cylinder 442 intervenes between the boom 441 and the turning superstructure 450 so as to be extended and contracted by being supplied with hydraulic oil and to turn the boom 441 in the rising or falling direction. The arm cylinder 444 intervenes between the arm 443 and the boom 441 so as to be extended and contracted by being supplied with hydraulic oil and to turn the arm 443 about a horizontal axis with respect to the boom 441. The bucket cylinder 446 intervenes between the bucket 445 and the arm 443 so as to be extended and contracted by being supplied with hydraulic oil and to turn the bucket 445 about a horizontal axis with respect to the arm 443.

### (Configuration of management client)

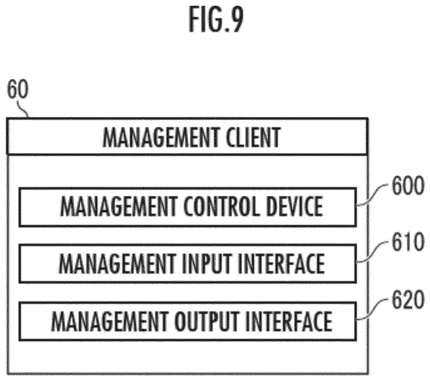

The management client 60 is a terminal device, such as a smartphone, a tablet terminal or a personal computer, and comprises a control device 600, a management input interface 610, and a management output interface 620. The control device 600 includes an estimation processing device (a single core processor, or a multi-core processor or processor cores constituting this), reads required data or software from a storage device, such as a memory, and executes an estimation process for the data according to the software (see FIG. 9).

The management input interface 610 includes touch panel type buttons, switches and the like. The management output interface 620 comprises an image output device, and wireless communication equipment.

For example, if it is before the operator starts work (before start of work), the management output interface 620 may obtain information about anti-fogging control via a communication line network, and notify the management output interface 620 (monitor) of a message indicating that a determination of occurrence of condensation is present and the air conditioner is in operation.

### (Configuration of remote operation support device)

The remote operation support device 100 includes a reception and transmission unit 101, a storage unit 102, a meteorological data obtaining unit 103, an intra-cab temperature estimation unit 104, an intra-cab humidity estimation unit 105, a fogging determination unit 106, and an anti-fogging control unit 107.

The reception and transmission unit 101 is a functional element that receives data from the outside, and transmits data to the outside. Specifically, the reception and transmission unit 101 is configured to be capable of receiving meteorological data from the meteorological data provider (meteorological information source) 30, and receiving data from the remote work support database 110. The reception and transmission unit 101 is configured to be capable of transmitting, to the work machine 40, a signal for preventing the window 425 from being fogged.

The reception and transmission unit 101 is configured to be capable of receiving data about the position (latitude and longitude) of the work machine 40 detected by the positioning device 414 mounted on the work machine 40. The details of the positioning device 414 are described later.

The storage unit 102 includes a storage device, and is configured to be capable of storing external information received by the remote work support server 10 or various data generated in the remote work support server 10. Examples of the storage device included in the storage unit 102 include: a magnetic storage device, such as an HDD (Hard Disk Drive); a semiconductor storage device, such as an SSD (Solid State Drive) or a flash drive; and an optical storage device, such as an optical disk. The storage device included in the storage unit 102, and a storage medium for storing data may be fixed or removable.

The meteorological data obtaining unit 103 receives, as meteorological data, information including meteorological data transmitted from the meteorological data provider (meteorological information source) 30, the meteorological data being received via the reception and transmission unit 101. The meteorological data may include information about the temperature and humidity in the area besides the weather in the area where a workplace resides. The meteorological data obtaining unit 103 may sequentially receive the meteorological data, or comprehensively receive the data at one time.

The meteorological data may be obtained in association with a designated time (e.g., a time input by the operator as a time of starting work). For example, in this case, the meteorological data is obtained as information indicating that at the work start time (e.g., 9 am), the weather in the area where the workplace resides is cloudy, the temperature is 20°C, and the humidity is 80%.

The intra-cab temperature estimation unit 104 has a function of estimating the temperature (intra-cab temperature) in the cab, based on the temperature (outside temperature) at the workplace included in the obtained meteorological data. For example, the intra-cab temperature estimation unit 104 estimates the temperature in the cab, based on the temperature at the workplace where the work machine 40 resides, the temperature having been transmitted from the meteorological data provider (meteorological information source) 30.

The intra-cab humidity estimation unit 105 has a function of estimating the humidity (intra-cab humidity) in the cab, based on the humidity (outside humidity) at the workplace included in the obtained meteorological data. For example, the intra-cab humidity estimation unit 105 estimates the humidity in the cab, based on the humidity at the workplace where the work machine 40 resides, the humidity having been transmitted from the meteorological data provider (meteorological information source) 30.

The fogging determination unit 106 determines presence or absence of occurrence of fogging, using the temperature in the cab estimated by the intra-cab temperature estimation unit 104, and on the humidity in the cab estimated by the intra-cab humidity estimation unit 105.

The anti-fogging control unit 107 instructs the work machine 40 to start anti-fogging control when the fogging determination unit 106 detects occurrence of fogging.

For example, the anti-fogging control unit 107 knows a predetermined temperature raising capability of the work machine 40 heating the windows 425, estimates a time (e.g., 8:50 am) when a temperature at which the windows 425 are defogged is reached, based on the temperature raising capability, and executes a process for causing the work machine 40 to start anti-fogging control, based on communication with the work machine 40, so as to achieve the temperature (e.g., 15°C) at which the windows 425 are defogged at the designated time (e.g., 9 am).

Additionally, for example, the anti-fogging control unit 107 has a function of performing, as an anti-fogging process, a process for generating a control signal for activating the room air conditioner (e.g., the air conditioner 4241) that adjusts at least one of the temperature (e.g., 15°C) and the humidity (e.g., 50%) at the location of the windows 425 in the internal space of the cab 424 where the remote output interface 220 of the work machine 40 (e.g., monitor) is configured, based on communication with the work machine 40.

Accordingly, for example, the anti-fogging control unit 107 performs a process of displaying information about occurrence (or tendency of occurrence) of fogging on the windows 425, on the monitor of the remote operation device 20. The operator looking at the display can activate the room air conditioner (e.g., the air conditioner 4241) of the work machine 40 from a remote site, by operating the remote input interface 210 (for example, turns on an air conditioner switch 212).

The details of the fogging determination unit 106 and the anti-fogging control unit 107 are described later.

### (Functions)

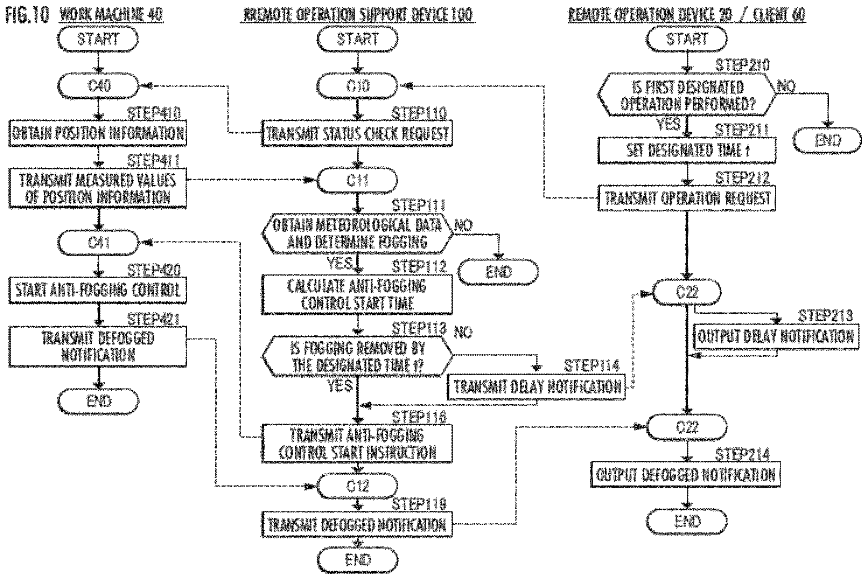

The remote operation device 20 (or the management client 60) determines presence or absence of a designated operation through the remote input interface 210 by the operator (FIG. 10/STEP 210). The "designated operation" is an operation of selecting the work machine 40 to cooperate with the remote operation device 20. For example, the presence or absence of the first designated operation is determined as follows. First, a map, a list or the like that indicates each residing position of work machines 40 capable of cooperating with the remote operation device 20 is output to the remote output interface 220. Next, it is determined whether or not an operation, such as of tap, for designating one work machine 40 to cooperate with the remote operation device 20 is performed by the operator.

When the determination result is negative (FIG. 10/STEP 210..NO), the processes after the determination of the presence or absence of the first designated operation are repeated. On the other hand, when the determination result is affirmative (FIG. 10/STEP 210..YES), an operation schedule of the work machine 40 to cooperate with the remote operation device 20 is set by the operator (FIG. 10/STEP 211). The operation schedule includes a designated time t for the work machine 40 to cooperate with the remote operation device 20. The designated time t is a time when the operation of the work machine 40 by the remote operation device 20 is started.

Next, through the remote wireless communication equipment 222, an operation request is transmitted to the remote work support server 10 (FIG. 10/STEP 212). The request includes: a work machine identifier for identifying the work machine 40 having communication established with the remote operation device 20, or the work machine 40 designated through the remote input interface 210; and the set designated time.

In the remote work support server 10, the operation request is received (FIG. 10/C10), a status check request is transmitted by the reception and transmission unit 101 to the work machine 40 identified by the work machine identifier (FIG. 10/STEP 110).

In the work machine 40, the status check request through the actual machine wireless communication equipment 422 (FIG. 10/C40) is received, the actual machine control device 400 recognizes position information (latitude and longitude) of the work machine 40 through the positioning device 414 (FIG. 10/STEP 410).

The actual machine control device 400 transmits the position information or position data indicating this information, and measured values of internal state variables, to the remote work support server 10 through the actual machine wireless communication equipment 422 (FIG. 10/STEP 411).

In the remote work support server 10, the position information is received by the reception and transmission unit 101, and the remote work support server 10 recognizes the position information (FIG. 10/C11).

In a case where the position information on the work machine 40 is preliminarily recognized (for example, the position information of the work machine 40 at the last operation is stored and saved in the storage unit 102), the status check request by the remote work support server 10 to the work machine 40 (FIG. 10/STEP 110) and the recognition of the position information (FIG. 10/C11) may be omitted.

In the remote work support server 10, when the position information is recognized (FIG. 10/C11), the meteorological data is recognized based on the position information (FIG. 10/STEP 111). The "meteorological data" is, for example, the temperature and humidity around the work machine 40.

For example, the meteorological data obtaining unit 103 queries a meteorological information database that is an external information source, about the meteorological information at the position represented by the position information or in the area including the position, based on the position information of the work machine 40, thereby allowing the fogging determination unit 106 to determine whether or not fogging occurs in the work machine 40 at the designated time t, based on the temperature and the humidity around the work machine 40 (FIG. 10/STEP 111).

Specifically, the meteorological data obtaining unit 103 obtains the meteorological information corresponding to the position of the work machine 40 from a time several hours before (e.g., six hours before) the current time t1 to the designated time t, for example. Accordingly, actual values or estimation values of variation in temperature and humidity from a time several hours before to the designated time t are stored in the remote work support database 110.

The fogging determination unit 106 estimates the temperature and the humidity in the cab of the work machine 40 in consideration of the meteorological information corresponding to the position of the work machine 40 stored in the meteorological data obtaining unit 103 and of the characteristics of the work machine 40. For example, when the machine is not used and the temperature and the humidity of outside air are constant, the temperature and the humidity in the cab of the work machine 40 are substantially identical to those of the outside air.

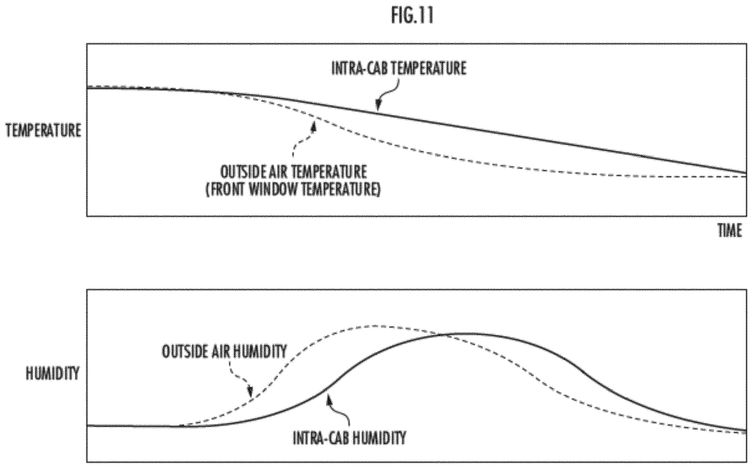

However, when the machine is not used and the temperature and the humidity of outside air vary, the temperature and the humidity in the cab of the work machine 40 vary owing to ventilation and heat transfer. For example, as shown in FIG. 11, when the temperature and the humidity of the outside air increase, the temperature and the humidity in the cab increases subsequently. When the temperature and the humidity of the outside air decreases, the temperature and the humidity in the cab decreases subsequently. The degree of such transmission of temperature or humidity of the outside air into the cab can be preliminarily known or estimated by past records of the work machine 40, simulation or the like. Such transmission characteristics of the temperature and the humidity are preliminarily stored in the fogging determination unit 106.

The fogging determination unit 106 determines presence or absence of fogging as follows. The intra-cab temperature estimation unit estimates the temperature in the cab of the work machine 40, and the intra-cab humidity estimation unit estimates the humidity in the cab of the work machine 40, based on the outside temperature and humidity which are the meteorological data corresponding to the position of the work machine 40, from the current time t1 to the designated time t obtained by the meteorological data obtaining unit 103. It is then determined whether the possibility of fogging on the windows 425 is high or not based on the estimated temperature and humidity in the cab of the work machine 40 and on the outside air temperature.

The fogging determination unit 106 determines whether the possibility of fogging on the windows 425 is high or not based on the relationship between the atmospheric temperature and the amount of saturated water vapor indicated by FIG.s 8(A) and 8(B). For example, a case is assumed where the intra-cab temperature is 20°C and the intra-cab humidity is 80%. The amount of saturated water vapor at the temperature of 20°C is 17.31 g/m³. Accordingly, the estimated amount of water vapor in the cab is 13.84 g/m³. When the outside air temperature is 20°C in this state, the windows 425 are at 20°C. Accordingly, the air in the cab is not cooled, and no fogging (condensation) occurs.

Meanwhile, as the outside air temperature decreases, the temperature of the windows 425 itself also decreases. Around the surfaces of the windows 425, the temperature of the air in the cab 424 decreases to a temperature equivalent to the outside air temperature accordingly. A case is assumed where the intra-cab temperature decreases from 20°C to 15°C, and the intra-cab humidity is 80% (the amount of water vapor in the cab is 13.84 g/m³). Here, the amount of saturated water vapor at the temperature of 15°C is 12.85 g/m³, and the amount of saturated water vapor at the temperature of 16°C is 13.65 g/m³. Since the amount of saturated water vapor thus exceeds by 0.19 g/m³ at a time point when the temperature is 16°C, fogging (condensation) occurs. At a time point when the outside air temperature decreases to 15°C, the amount of saturated water vapor exceeds by 0.99 g/m³. Accordingly, the fogging (condensation) state is further worsened.

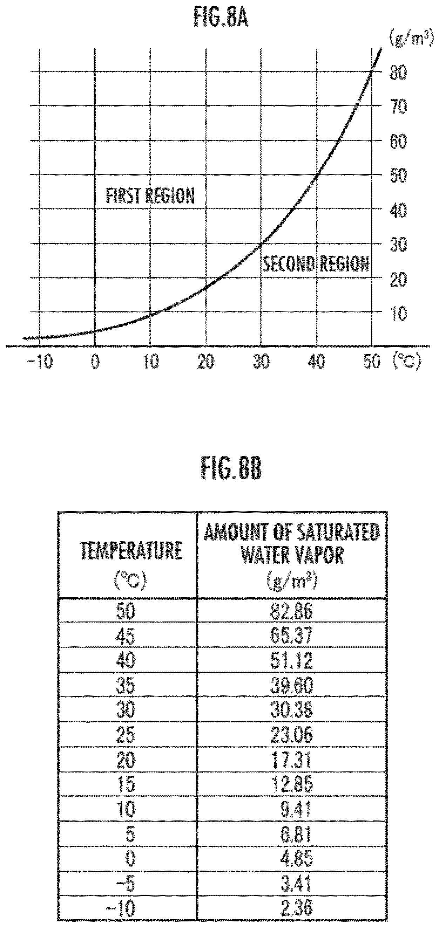

Consequently, the fogging determination unit 106 identifies which position in FIG. 8(B) the state of the cab at the designated time t is, by using the amount of water vapor in the cab and the outside air temperature, based on the relationship between the atmospheric temperature and the amount of saturated water vapor indicated in FIG. 8(A). FIG. 8(B) shows a first region where the amount of water vapor in the cab exceeds the amount of saturated water vapor, and a second region where the amount of water vapor in the cab does not exceed the amount of saturated water vapor. It is determined which region the state belongs to.

That is, when the identified results belong to the first region on the graph of FIG. 8(B), the fogging determination unit 106 determines that the possibility of fogging on the windows 425 is high.

When the fogging determination unit 106 determines that the possibility of fogging on the windows 425 is low at the designated time t (FIG. 10/STEP 111..NO), the control is finished. On the other hand, when it is determined that the possibility of fogging on the windows 425 is high at the designated time t (FIG. 10/STEP 111..YES), the remote operation support device 100 calculates a time when the anti-fogging control is started by the anti-fogging control unit 107 (FIG. 10/STEP 112).

The anti-fogging control unit 107 knows the temperature raising capability of heating the windows 425 by the air conditioner and the like of the work machine 40. The temperature raising capability is known as the temperature increase rate F (°C/min) per unit time at the windows 425. The temperature raising capability may be preliminarily known by simulation based on the heating performance of the air conditioner or the like of the work machine 40 and on the size of the cab, or by past operation history.

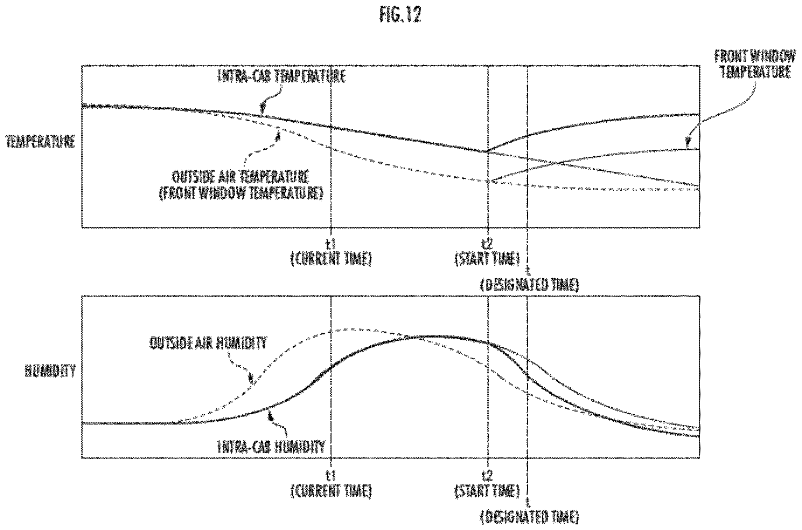

As shown in FIG. 12, the anti-fogging control unit 107 regards the outside air temperature at each time point from the current time t1 (e.g., 8:30 am) to the designated time t (e.g., 9 am), as the temperature of the windows 425. In a case where the air conditioner and the like are operated at the temperature increase rate F (°C/min) to heat the windows 425 at each time point, a time point when the windows 425 reach the temperature at which the fogging (condensation) is removed at the designated time t (e.g., 9 am) is identified as the start time t2 (e.g., 8:50 am). Alternatively, to securely remove the fogging (condensation) at the designated time t (e.g., 9 am), a time point when the fogging (condensation) is removed immediately before the designated time t (for example, a time point one to five minutes before is set) may be identified as a start time t2 (e.g., 8:45 am).

If the time point when the temperature at which the fogging (condensation) on the windows 425 is removed is reached is after the designated time t (e.g., 9 am) (FIG. 10/STEP 113..NO) as a result of calculation of the time of starting the anti-fogging control by the anti-fogging control unit 107 (FIG. 10/STEP 112), the remote operation support device 100 causes the reception and transmission unit 101 to transmit a delay notification (FIG. 10/STEP 114). When the delay notification is received (FIG. 10/C22), the remote operation device 20/management client 60 outputs the delay notification to the remote output interface 220, and notifies the operator that fogging (condensation) is present at the time point of the designated time t (e.g., 9 am) and work is not allowed (FIG. 10/STEP 213). This process is performed in a case where a sufficient time period cannot be secured between the current time t1 and the designated time t (e.g., 9 am). Additionally, in this case, a time (e.g., 9:30 am) at which the fogging (condensation) is estimated to be removed may be output to the remote output interface 220.

When the start time t2 (e.g., 8:50 am) is reached, the anti-fogging control unit 107 transmits an anti-fogging control start instruction to the work machine 40 via the reception and transmission unit 101 (FIG. 10/STEP 116). In a case where the time point at which the fogging (condensation) is removed is after the designated time t (e.g., 9 am) (FIG. 10/STEP 113..NO), the current time t1 (e.g., 8:30 am) is set as the start time t2, and the anti-fogging control start instruction is immediately transmitted to the work machine 40.

In the work machine 40, when the remote wireless communication equipment 222 receives the anti-fogging control start instruction (FIG. 10/C41), the air conditioner 4241 is activated (FIG. 10/STEP 420). When the air conditioner 4241 is continuously in operation until the designated time t (e.g., 9 am), a defogged notification is transmitted to the remote operation device 20 (FIG. 10/STEP 421). When the remote operation support device 100 receives the defogged notification transmitted from the work machine 40 (FIG. 10/C12), it transmits the defogged notification to the remote operation device 20 (FIG. 10/STEP 119).

In the remote operation device 20, when the defogged notification is received by the remote control device 200 (FIG. 10/C22), the defogged notification is output to the remote output interface 220 and the image output device 221 constituting the management client 60 (FIG. 10/STEP 2124). Accordingly, the defogged notification is output, and the operator can know the fact that the work machine 40 has no fogging problem.

In case the air conditioner 4241 cannot continuously be in operation until the designated time t (e.g., 9 am) owing to a failure or the like, the defogged notification is not transmitted. In this case, it may be displayed that fogging is present and the air conditioner 4241 is possibly out of order, on the remote output interface 220 or the image output device 221 constituting the management client 60.

In the work machine 40, what is activated when the remote wireless communication equipment 222 receives the anti-fogging control start instruction (FIG. 10/C41) may be the defroster 4242 or the window drive mechanism 4243.

### (Advantageous effects of invention)

According to the remote operation support system S having the configuration, and the remote operation support device 100 included therein, depending on the determination result of the fogging determination unit 106, the anti-fogging control unit 107 performs a process for activating the room air conditioner (the air conditioner 4241, the defroster 4242, and the window drive mechanism 4243) in order to prevent the front window 425F from being fogged at the designated time. Accordingly, the front window 425F of the work machine 40 to be remotely operated is prevented from being fogged. Consequently, even when the operator does not actually get in the work machine 40, the environment in the cab can be kept so as to prevent the front window 425F from being fogged. Therefore, the visibility of the operator remotely operating the work machine is not blocked by condensation. Consequently, the operator can perform work with clear visibility.

### (Other embodiments of present invention)

In the aforementioned embodiment, the example where the fogging determination unit determines whether the front window 425F is possibly fogged or not is described. However, there is no limitation thereto. For example, the fogging determination unit may determine the presence or absence of possibility of fogging on the roof window 425T, the right window 425R, the left window 425L, and the back window 425B (see FIG. 7).

It is a matter of course that the number of windows 425 is not limited to such a number. That is, the number of front windows 425F may be two or more. The number of roof windows 425T may be two or more. The number of right windows 425R may be two or more. The number of left windows 425L may be two or more. The number of back windows 425B may be two or more.

In the aforementioned embodiment, the example where the fogging determination unit 106 determines whether the front window 425F is possibly fogged or not is described. However, there is no limitation thereto. For example, the fogging determination unit 106 may determine the presence or absence of possibility of fogging on a camera lens of the imaging device 412 installed in the cab 424.

In the aforementioned embodiment, the example where the anti-fogging control unit 107 performs the control for preventing the front window 425F from being fogged, by operating the air conditioner 4241 is described. However, there is no limitation thereto. For example, the anti-fogging control unit 107 may perform the control for preventing the front window 425F from being fogged, by activating the defroster 4242.

In the aforementioned embodiment, the example where the anti-fogging control unit 107 performs the control for preventing the front window 425F from being fogged, by operating the air conditioner 4241 is described. However, there is no limitation thereto. For example, the anti-fogging control unit 107 may perform the control for preventing each of the windows 425 from being fogged, by opening and closing any of the windows 425 including the roof window 425T, the right window 425R, the left window 425L and the back window 425B.

The anti-fogging control unit 107 knows a predetermined temperature raising capability of the work machine 40 when heating the windows 425, estimates a time when the temperature at which the windows 425 are defogged is reached, based on the temperature raising capability, and executes a process for causing the work machine 40 to start anti-fogging control, based on communication with the work machine 40, so as to achieve the temperature at which the windows 425 are defogged at the designated time.

According to the remote operation support device 100 having this configuration, the anti-fogging process is performed so that the time at which fogging is removed by heating the windows 425 can be the designated time. Consequently, the anti-fogging control time period can be minimized, and the battery consumption can be reduced.

If the estimated time when the temperature at which the windows 425 are defogged is reached is after the designated time, the anti-fogging control unit 107 executes a process of causing the remote operation support device 100 to output a delay notification to the remote output interface 220, based on communication with the remote operation support device 100.

According to the remote operation support device 100 having this configuration, if the time at which the temperature of removing fogging on the windows 425 is reached is after the designated time, that is, the operator may be notified that defogging cannot be achieved in time.

The anti-fogging control unit 107 executes a process, as the anti-fogging process, for generating a control signal, based on communication with the work machine 40, the control signal being for activating the room air conditioner (at least one of the air conditioner 4241, the defroster 4242 and the window drive mechanism 4243) that is included in the actual machine output interface 420 of the work machine 40, and adjusts at least one of the temperature and the humidity at the location of the windows 425 in the internal space of the cab 424.

According to the remote operation support device 100 having this configuration, even if the operator having identified the notification about the content indicating that it is preferable to activate the room air conditioner does not activate the room air conditioner, the process of generating the control signal for activating the room air conditioner is executed. Accordingly, even if the operator cannot activate the room air conditioner, the room air conditioner is activated, and the windows 425 are defogged. Accordingly, the operator can start work at the designated time.

### Reference Signs List

S..Remote operation support system, 10..Remote work support server, 20..Remote operation device, 30..Meteorological data provider (meteorological information source), 40..Work machine, 60..Management client, and 100..Remote operation support device.

## Claims

1. A remote operation support device for supporting an operator's remote operation of a work machine using a remote operation device comprising a remote output interface that outputs a taken image that has been taken through a window defining a cab by an imaging device and indicates a situation outside of the cab, the imaging device being disposed in an internal space of the cab of the work machine, the remote operation support device comprising:
a meteorological data obtaining unit configured to obtain meteorological data that is data about a meteorological phenomenon at a designated time in an area where the work machine resides, from a meteorological information source residing outside of the work machine;
an intra-cab temperature estimation unit configured to estimate a temperature in the internal space of the cab of the work machine, based on the meteorological data;
an intra-cab humidity estimation unit configured to estimate a humidity in the internal space of the cab of the work machine, based on the meteorological data;
a fogging determination unit configured to determine whether the window is fogged or not based on outside temperature data that is data about an outside temperature outside of the cab of the work machine and is included in the meteorological data, on intra-cab temperature data that is data about the temperature in the cab estimated by the intra-cab temperature estimation unit, and on intra-cab humidity data that is data about the humidity in the cab estimated by the intra-cab humidity estimation unit; and
an anti-fogging control unit configured to perform an anti-fogging process for preventing the window from being fogged when a determination result by the fogging determination unit is affirmative.

2. The remote operation support device according to claim 1,
wherein an anti-fogging control unit knows a predetermined temperature raising capability of the work machine heating the windows, estimates a time when a temperature at which the windows are defogged is reached, based on the temperature raising capability, and executes a process for causing the work machine to start anti-fogging control, based on communication with the work machine, so as to achieve the temperature at which the windows are defogged at the designated time.

3. The remote operation support device according to claim 1 or claim 2,
wherein if an estimated time when a temperature at which the windows are defogged is reached is after the designated time, an anti-fogging control unit executes a process of causing the remote operation support device to output a delay notification to the remote output interface, based on communication with the remote operation support device.

4. The remote operation support device according to claim 1,
wherein the anti-fogging control unit executes a process, as the anti-fogging process, for generating a control signal, based on communication with the work machine, the control signal being for activating a room air conditioner that is included in an actual machine output interface of the work machine, and adjusts at least one of a temperature and a humidity at a location of the windows in the internal space of the cab.

5. A remote operation support system, comprising: the remote operation support device according to claim 1; the remote operation device; and the work machine.

6. A remote operation support method for supporting an operator's remote operation of a work machine using a remote operation device comprising a remote output interface that outputs a taken image that has been taken through a window defining a cab by an imaging device and indicates a situation outside of the cab, the imaging device being disposed in an internal space of the cab of the work machine, the remote operation support method executing:
a meteorological data obtaining process of obtaining meteorological data that is data about a meteorological phenomenon at a designated time in an area where the work machine resides, from a meteorological information source residing outside of the work machine;
an intra-cab temperature estimation process of estimating a temperature in the internal space of the cab of the work machine, based on the meteorological data;
an intra-cab humidity estimation process of estimating a humidity in the internal space of the cab of the work machine, based on the meteorological data;
a fogging determination process of determining whether the window is fogged or not based on outside temperature data that is data about an outside temperature outside of the cab of the work machine and is included in the meteorological data, on intra-cab temperature data that is data about the temperature in the cab estimated by the intra-cab temperature estimation unit, and on intra-cab humidity data that is data about the humidity in the cab estimated by the intra-cab humidity estimation unit; and
an anti-fogging process for preventing the window from being fogged when a determination result by the fogging determination unit is affirmative.
